# EUROPÄISCHE PATENTSCHRIFT

(11) **EP 1 792 065 B1**
(45) Veröffentlichungstag und Bekanntmachung des Hinweises auf die Patenterteilung: **01.09.2010**
(21) Anmeldenummer: 05783974.8
(22) Anmeldetag: 16.09.2005
(51) Int. Cl.: F02B 23/06

(54) **BRENNKRAFTMASCHINE**
INTERNAL COMBUSTION ENGINE
MOTEUR A COMBUSTION INTERNE

(30) Priorität: 21.09.2004 DE 102004045634
(43) Veröffentlichungstag der Anmeldung: 06.06.2007
(73) Patentinhaber: Daimler AG, 70327 Stuttgart (DE)
(72) Erfinder: HUTMACHER, Rolf, 73630 Remshalden (DE)
(74) Vertreter: Moore, Derek
(86) Internationale Anmeldenummer: PCT/EP2005/009977
(87) Internationale Veröffentlichungsnummer: WO 2006/032410

(56) Entgegenhaltungen:
- EP-A- 0 845 589
- EP-A- 0 849 448
- EP-A- 1 217 186
- DE-A1- 10 028 449
- DE-A1- 10 213 011
- US-A- 4 858 578
- US-A1- 2004 182 358
- PATENT ABSTRACTS OF JAPAN Bd. 017, Nr. 465 (M-1468), 25. August 1993 (1993-08-25) -& JP 05 106442 A (YANMAR DIESEL ENGINE CO LTD), 27. April 1993 (1993-04-27)
- BERGMANN HORST ET AL: "DIE THERMODYNAMIK DES NEUEN NUTZFAHRZEUGMOTORS OM 904 LA VON MERCEDES-BENZ" MTZ MOTORTECHNISCHE ZEITSCHRIFT, VIEWEG VERLAG, WIESBADEN, DE, Bd. 57, Nr. 4, 1. April 1996 (1996-04-01), Seiten 216-220,222,22, XP000582644 ISSN: 0024-8525 & PETER KOZUCH: "Ein phänomenologisches Modell zur kombinierten Stickoxid- und Russberechnung bei direkteinspritzenden Dieselmotoren" 5. November 2004 (2004-11-05), VON DER FAKULTÄT MASCHINENBAU DER UNIVERSITÄT STUTTGART ZUR ERLANGUNG DER WÜRDE EINES DOKTOR-INGENIEURS GENEHMIGTE ABHANDLUNG , INSTITUT FÜR VERBRENNUNGSMOTOREN UND KRAFTFAHRWESEN DER UNIVERSITÄT STUTTGART , XP002353316 Zusammenfassung; Abbildung 3.1 Seite 16, Absatz 1 - Seite 17, Absatz 1 Seite 170; Tabelle A.1
- PETER KOZUCH: "Ein phänomenologisches Modell zur kombinierten Stickoxid- und Russberechnung bei direkteinspritzenden Dieselmotoren" 5. November 2004 (2004-11-05), VON DER FAKULTÄT MASCHINENBAU DER UNIVERSITÄT STUTTGART ZUR ERLANGUNG DER WÜRDE EINES DOKTOR-INGENIEURS GENEHMIGTE ABHANDLUNG , INSTITUT FÜR VERBRENNUNGSMOTOREN UND KRAFTFAHRWESEN DER UNIVERSITÄT STUTTGART , XP002353316 Zusammenfassung; Abbildung 3.1 Seite 16, Absatz 1 - Seite 17, Absatz 1 Seite 170; Tabelle A.1

## Beschreibung

Die Erfindung betrifft eine Brennkraftmaschine, insbesondere eine selbstzündende direkteinspritzende Brennkraftmaschine gemäß dem Oberbegriff des Anspruchs 1.

Bei direkteinspritzenden Brennkraftmaschinen mit Selbstzündung werden zur Optimierung der Verbrennung unterschiedliche Kolbenmuldenformen eingesetzt, mit denen die entsprechende Brennraumkonfiguration bestimmt und die Verbrennung im Brennraum beeinflusst wird. Hierdurch soll die Gemischaufbereitung im Brennraum und somit die Emissionsbildung im Abgas verbessert werden. Weiterhin kann die Funktionsweise einer nachgeschalteten Abgasnachbehandlung optimiert werden.

Aus der DE 100 28 449 A1 ist eine Kolbenmulde mit einem Kompressionshöcker bekannt, die in ihrer Grundform annähernd eine Kugelkalotte bildet. Im Bereich einer maximalen Muldentiefe weist die Mulde einen Ringdurchmesser auf, der kleiner ist als der halbe Kolbendurchmesser. Hierdurch soll sich der Kolben durch seine mechanische und thermische Haltbarkeit für höhere Verbrennungsdrücke eignen, so dass höhere Wirkungsgrade und Leistungen erzielt werden können.

Aus der EP 0 849 448 A1 ist eine Kolbenmulde mit abgeflachtem Kompressionshöcker und nahezu senkrecht ansteigender Außenwand bekannt. In der JP 05 106442 A hingegen ist eine Muldenform offenbart, die einen abgeflachten Muldengrund und eine Ausnehmung im Kompressionshöcker aufweist. Beide Muldenformen weisen jedoch Nachteile bei der Gemischbildung auf.

Der Erfindung liegt daher die Aufgabe zugrunde, eine Brennkraftmaschine mit Selbstzündung bereitzustellen, bei der die Gemischbildung sowie die Verbrennung im Brennraum verbessert sind. Diese Aufgabe wird erfindungsgemäß durch eine Vorrichtung mit den Merkmalen des Anspruchs 1 gelöst.

Die erfindungsgemäße Brennkraftmaschine zeichnet sich dadurch aus, dass die Kolbenmulde unterhalb einer an einem obersten Teil des Muldenrands anliegenden horizontalen Ebene ein Muldenvolumen aufweist und derart ausgebildet ist, dass ein Verhältnis von maximaler Muldentiefe zu Muldenvolumen in einem Bereich zwischen 0,05 und 0,35, insbesondere zwischen 0,1 und 0,25 liegt. Hierdurch wird eine optimierte Gestaltung des Brennraums im Hinblick auf die Kraftstoffmassenverteilung im vorhandenen Kolbenmuldenvolumen erzielt, so dass vor und/oder während der Selbstzündung ausreichende Sauerstoffanteile für die Verbrennung zur Verfügung stehen. Somit wird eine Rußpartikelbildung minimiert bzw. weitgehend gehemmt. Durch die erfindungsgemäß vorgesehenen Abmessungen bzw. Verhältnisse kommt eine angepasste Gesamtoberfläche des Muldeninneren zustande, mit der die Bildung von kraftstoffreichen Zonen innerhalb des erfindungsgemäßen Muldenvolumens nahezu vollständig verhindert bzw. erheblich reduziert wird. Die bei den erfindungsgemäßen Verhältnissen überraschend erzielten Effekte werden vorwiegend durch die günstige Abstimmung zwischen der intensiven Verteilung der Kraftstoffteilchen und insbesondere der erlangten Vermischungstiefe der Kraftstofftröpfchen in Relation zum Muldenvolumen erreicht.

Gemäß einer Ausführungsform nach Anspruch 2 zeichnet sich die erfindungsgemäße Brennkraftmaschine dadurch aus, dass die Kolbenmulde von einem ringförmigen Muldenrand mit einem maximalen Muldendurchmesser umfasst ist, und der Kolben einen Kolbendurchmesser aufweist, wobei ein Verhältnis von Kolbendurchmesser zu maximalem Muldendurchmesser in einem Bereich zwischen 1,05 und 1,4 oder zwischen 1,05 und 1,3 liegt. Vorzugsweise liegt das Verhältnis in einem Bereich von 1,1 bis 1,2. Hierdurch wird eine bemerkenswert schnelle Kraftstoffmassenausbreitung innerhalb der Kolbenmulde hervorgerufen und somit eine rasche Vermischung des Kraftstoffes mit der Luft erzielt. Eine auf den Kolbendurchmesser abgestimmte Kraftstoffteilchenverteilung wird erzielt, die erfindungsgemäß eine überdurchschnittliche Kraftstoffausbreitung und somit beachtliche Vermischung mit der Verbrennungsluft innerhalb der Mulde ermöglicht. Somit wird die Bildung kraftstoffreicher Zonen an kritischen Stellen im Brennraum auf ein Minimum reduziert.

Gemäß einem weiteren Ausführungsbeispiel nach Anspruch 3 zeichnet sich die erfindungsgemäße Brennkraftmaschine dadurch aus, dass die Einspritzbohrungen und der Kompressionsvorsprung derart ausgebildet sind, dass ein gebildetes Verhältnis von Kraftstoffkegelwinkel zu Muldenwinkel in einem Bereich zwischen 0,95 und 1,36, insbesondere zwischen 1,15 und 1,3 liegt. Somit wird die einspritzte Kraftstoffmasse innerhalb der Kolbenmulde gleichmäßig verteilt und eine Kraftstoffvermischung mit der Verbrennungsluft intensiviert. Demnach wird durch das vorgesehene Verhältnis bzw. die Abstimmung des Kraftstoffkegelwinkels auf den Muldenwinkel eine Brennraumkonfiguration geschaffen, durch die eine angepasste Interaktion zwischen Muldenkonturverlauf und einer aus der Einspritzdüse austretenden Kraftstoffmasse innerhalb der Kolbenmulde hervorgerufen wird. Ist der Vorsprung kegelförmig ausgebildet, dann wird ein Kegelwinkel als Muldenwinkel herangezogen, wobei der Vorsprung andere Formen, beispielsweise eine kugelförmige Gestaltung, aufweisen kann. Eine anliegende Tangente am Vorsprung mit entsprechender Neigung, kann dann zur Ermittlung des Muldenwinkels herangezogen werden.

Die erzielten Effekte sind vorwiegend auf eine günstige Abstimmung zwischen dem Auftreffwinkel der Kraftstoffteilchen auf die Mulde und der erzielten Eintauchtiefe der Kraftstofftröpfchen in Relation zum Muldenwinkel zurückzuführen. Dadurch lässt sich eine ausreichende Vermischung der Kraftstofftröpfchen mit der Verbrennungsluft erzielen. Somit findet die Verteilung des eingespritzten Kraftstoffs innerhalb der Kolbenmulde und die anschließende Vermengung mit der Brennraumluft vor dem Einsetzen einer unerwünschten Rußpartikelbildung insbesondere während eines Volllastbetriebs statt.

Gemäß einer weiteren Ausgestaltung der Erfindung weist die Kolbenmulde im Muldenboden bei einer maximalen Muldentiefe einen Durchmesser auf, wobei ein Verhältnis von Durchmesser bei maximaler Muldentiefe zu Kolbendurchmesser in einem Bereich zwischen 0,22 und 0,45, insbesondere zwischen 0,3 und 0,39 liegt. Im vorgeschlagenen Bereich bilden sich erfindungsgemäß auf den Kolbendurchmesser abgestimmte Strömungsverhältnisse, die im unteren Muldenbereich eine schnelle und ausreichende Vermischung der Kraftstoffstrahlen mit Verbrennungsluft ermöglichen. Somit werden turbulente Strömungsbewegungen erzielt, die die Bildung von kraftstoffreichen Zonen im unteren Muldenbereich weitgehend verhindern.

In einer weiteren Ausgestaltung der Erfindung weist eine Kolbenmuldenkontur zwischen dem Muldenboden und dem Muldenrand einen Muldenbodenradius auf, wobei ein Verhältnis von Muldenbodenradius zu maximalem Muldendurchmesser in einem Bereich zwischen 0,1 und 0,35 liegt, insbesondere zwischen 0,16 und 0,22. Hierdurch ist eine gleichmäßige und kontrollierte Führung der Kraftstoffteilchen entlang des Kolbenmuldenbodens gewährleistet. Dies führt dann gezielt zu einer stärkeren Vermischung des Kraftstoffes mit der Verbrennungsluft. Weiterhin wird eine ausreichende Kontaktoberfläche mit der Verbrennungsluft für die am Muldenboden gleitenden Kraftstoffstrahlen in Abstimmung mit der Kolbenmuldengröße zur Verfügung gestellt.

Gemäß einer weiteren Ausgestaltung der Erfindung weist die Kolbenmuldenkontur zwischen dem Kompressionsvorsprung und dem Muldenboden einen Vorsprungsradius auf, wobei ein Verhältnis vom Vorsprungsradius zu maximalem Muldendurchmesser in einem Bereich zwischen 0,45 und 1,1 liegt. Dadurch werden die auf den Muldenboden auftreffenden Kraftstoffteilchen derart beschleunigt, dass die Kraftstoffteilchen zu sauerstoffreichen Zonen weiter geführt werden, um eine unerwünschte Konzentration von kraftstoffreichen Zonen im Muldenbodenbereich zu verhindern.

Gemäß einer weiteren Ausgestaltung der Erfindung ist der Kompressionsvorsprung derart ausgebildet, dass der höchst liegende Kompressionsvorsprungsbereich vom Kolbenboden durch einen minimalen Kompressionsabstand beabstandet ist, wobei ein Verhältnis von minimalem Kompressionsabstand zu maximaler Muldentiefe in einem Bereich zwischen 0,1 und 0,45 liegt, insbesondere zwischen 0,15 und 0,25. Somit ist ein zwischen der Einspritzdüse und dem Kompressionsvorsprung auf die Muldentiefe abgestimmter Freiraum geschaffen, durch den die Bildung kraftstoffreicher Zonen im Bereich des Kompressionsvorsprungs minimiert wird. Es werden durch die aufeinander abgestimmten und erfindungsgemäß vorgeschlagenen Verhältnisse günstige Strömungsbedingungen erzielt, die eine notwendige Luft-, bzw. Sauerstoffzufuhr zu den kraftstoffreichen Zonen im Bereich des Kompressionsvorsprungs und des Kolbenmuldenbodens ermöglichen.

Weitere Vorteile ergeben sich aus der folgenden Beschreibung sowie den zugehörigen Zeichnungen. In den Zeichnungen sind Ausführungsbeispiele der Erfindung dargestellt. Es zeigen:
- Fig. 1: eine schematische Darstellung einer erfindungs- gemäßen Brennraumkonfiguration einer Brennkraft- maschine mit Selbstzündung und
- Fig. 2: eine schematische Darstellung einer Querschnitts- ansicht eines Kolbens der Brennkraftmaschine nach Fig. 1.

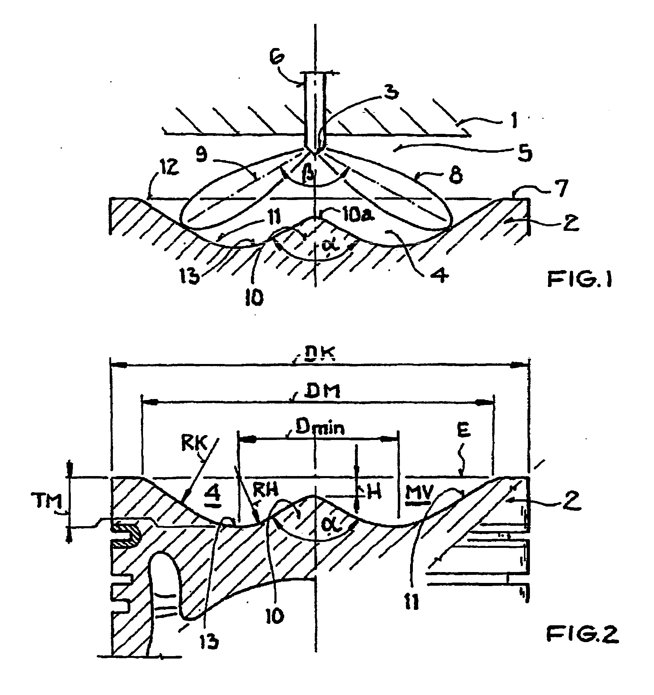

In Fig. 1 ist eine Brennkraftmaschine abgebildet, die mindestens einen nicht dargestellten Zylinder und einen Zylinderkopf 1 aufweist. Innerhalb des Zylinders ist ein Brennraum 5 zwischen einem Kolben 2 und dem Zylinderkopf 1 begrenzt. Im Zylinderkopf 1 ist ein Kraftstoffinjektor 6 mit einer Einspritzdüse 3 angeordnet, welche mehrere nicht dargestellte Einspritzbohrungen aufweist. Aus den Einspritzbohrungen treten mehrere Kraftstoffstrahlen aus, wobei die Einspritzdüse 3 fünf bis neun, vorzugsweise sechs bis acht Einspritzbohrungen aufweist. Der Kraftstoff wird hierdurch in einer entsprechend Zahl von Kraftstoffstrahlen 8 direkt in den Brennraum 5 eingespritzt, sodass eine direkt einspritzende Brennkraftmaschine realisiert ist. Vorzugsweise wird in den Brennraum 4 ein Dieselkraftstoff eingespritzt, so dass eine selbstzündende Verbrennung eingeleitet wird. Ein zwischen den Kraftstoffstrahlen gebildeter Kraftstoffkegelwinkel β liegt in einem Bereich zwischen 50° und 160°.

Eine in den Kolbenboden 7 eingelassene Kolbenmulde 4 befindet sich an der dem Zylinderkopf 1 zugewandten Seite des Kolbens 2 und ist von einem ringförmigen Muldenrand 12 nach außen hin begrenzt. Der Kolben 2 weist einen Kolbendurchmesser DK auf, wobei die Kolbenmulde unterhalb einer Ebene E, die an einer oberen Muldenrandoberfläche anliegt, ein Muldenvolumen MV aufweist. Bei einem flachen Kolbenboden 7, der gemäß Fig. 2 an den Muldenrand 12 angrenzt, ist die Ebene E als eine mit dem Kolbenboden 7 deckungsgleiche horizontale Fläche abgebildet. Dennoch kann die Ebene E je nach Verlauf des Muldenrandes 12 oberhalb des Kolbenbodens 7 bzw. unterhalb des Kolbenbodens 7 liegen.

Wie in Fig. 1 erkennbar ist, weist die Kolbenmulde 4 einen nahezu mittig positionierten, sich in Richtung des Zylinderkopfes 1 erstreckenden Kompressionsvorsprung 10 auf. Der vorzugsweise in Form einer kegelförmigen Erhebung ausgebildete Vorsprung 10 weist einen Vorsprungskegelwinkel α auf, nachfolgend als Muldenwinkel bezeichnet. Die ausgebildete Erhebung 10 ist nicht auf eine kegelförmige Struktur beschränkt. Sie kann auch anders, beispielsweise als ein kugelförmiger Vorsprung ausgebildet sein. Gemäß Fig. 2 erstreckt sich die Muldenkontur 11 vom Kompressionsvorsprung 10 aus gesehen in Richtung eines Muldenbodens 13 und dann weiter in Richtung des Muldenrandes 12. Unter einem Muldenrand ist das Ende bzw. der äußerste Bereich der Kolbenmulde 4 zu verstehen, in dem die Oberfläche des Kolbenbodens 7 beginnt. Die Kolbenbodenoberfläche 7 grenzt unmittelbar am Muldenrand 12 an.

Gemäß Fig. 2 ist die Einspritzdüse 6 oberhalb der im Kolbenboden 7 eingelassenen Kolbenmulde 4 angeordnet, wobei die Kolbenmulde 4 wiederum mittig im Brennraum 5 der Brennkraftmaschine angeordnet ist. Die tellerartige Muldengrundform weist im Randbereich der Kolbenmulde 4 einen abgerundeten Übergang zum Kolbenboden 7 auf, um Ansammlungen des Kraftstoffs zu vermeiden. Ein Abstand H zwischen dem oberen Vorsprungsbereich 10a und dem Kolbenboden 7 ist vorgesehen. Durch den vorgesehenen Abstand H bleibt genügend Freiraum, so dass sich die in Richtung des Vorsprungs 10 abgelenkte Kraftstoffmenge gut verteilen kann. Der Anteil des in Richtung des Muldenrands 12 abgelenkten Kraftstoffs wird durch die Ausgestaltung der Kolbenmulde 4 und deren Abmessungen im Vergleich zum Kolbendurchmesser DK bestimmt. Die Verhältnisse sind so zu wählen, dass eine Bildung von kraftstoffreichen Zonen vermieden wird, um die Rußpartikelbildung zu unterdrücken.

Die vorliegende Erfindung zielt darauf ab, mittels einer erfindungsgemäßen Brennraumkonfiguration die in den Brennraum 5 eingebrachten Kraftstoffstrahlen in Abstimmung auf die Kolbenmuldenkontur 11 einzuspritzen. Somit wird die Kraftstoffmasse durch die erfindungsgemäße Muldengestaltung innerhalb der Kolbenmulde 4 geführt und gleichzeitig intensiv mit der verdichteten Verbrennungsluft vermischt. Weiterhin wird mit Hilfe der vorgeschlagenen Brennraumkonfiguration versucht, eine mögliche Entstehung von kraftstoffreichen Zonen innerhalb der Kolbenmulde 4 zu vermeiden, so dass die selbstzündende Verbrennung mit kleinstmöglicher Rußpartikelbildung stattfinden kann. Dies ist insbesondere bei Betriebspunkten mit großen Kraftstoffmassen, beispielsweise im Vollastbetrieb, vorteilhaft, um nahezu rußpartikelfreie Abgase beim Betrieb der Brennkraftmaschine insbesondere in oberen Drehzahl- und Lastbereichen zu ermöglichen.

Die Kolbenmulde 4 ist gemäß einem ersten Ausführungsbeispiel der Erfindung derart ausgebildet, dass ein Verhältnis TM/MV von maximaler Muldentiefe TM zu Muldenvolumen MV in einem Bereich zwischen 0,05 und 0,35 liegt. Um die Kraftstoffverteilungsverhältnisse und Vermischungsbedingungen innerhalb der Mulde sehr vorteilhaft im Sinne der Erfindung zu gestalten, ist das Verhältnis TM/VM zwischen 0,1 und 0,25 zu wählen, da mit dem vorgesehenen Verhältnis zwischen 0,1 und 0,25 überraschend Effekte durch eine hervorragende Abstimmung zwischen der intensiven Verteilung der Kraftstoffteilchen und insbesondere der erzielten Vermischungstiefe der Kraftstofftröpfchen in Relation zum Muldenvolumen erreicht werden.

Nach einer zweiten vorteilhaften Ausführungsform der Erfindung weist der ringförmige Muldenrand 12 einen maximalen Muldendurchmesser DM auf, wobei ein Verhältnis DK/DM von Kolbendurchmesser DK zu maximalem Muldendurchmesser DM in einem Bereich zwischen 1,05 und 1,4 oder zwischen 1,05 und 1,3 liegt. Vorzugsweise liegt dieses Verhältnis zwischen 1,1 und 1,2. Hierdurch wird im Brennraum 5 eine auf den Kolbendurchmesser abgestimmte Kraftstoffverteilung erzielt, die erfindungsgemäß eine ausreichende Kraftstoffausbreitung und somit eine gute Vermischung mit der Verbrennungsluft innerhalb der Mulde ermöglicht.

In Fig. 1 sind Kraftstoffeinspritzstrahlen 8 abgebildet, die sich ergeben, wenn sich der Kolben 2 nahezu in einem oberen Totpunkt OT befindet. Die Einspritzstrahlen 8 sind jeweils schematisch als Achsen eines sich innerhalb des Brennraumes 5 befindlichen Einspritzkegels 9 dargestellt. Insbesondere wenn die Kraftstoffeinspritzung in einem Bereich von 20°KW vor einem oberen Totpunkt OT bis 35°KW nach dem oberen Totpunkt OT stattfindet, treffen die mit einem Kraftstoffkegelwinkel β aus den Einspritzbohrungen austretenden Kraftstoffstrahlen auf die Kolbenmulde 4 auf und vermischen sich innerhalb der Kolbenmulde 4 mit der Verbrennungsluft. Zur Erzielung einer rußfreien Verbrennung sind die Einspritzbohrungen und der Kompressionsvorsprung 10 derart ausgebildet, dass ein gebildetes Verhältnis β/α von Kraftstoffkegelwinkel β zu Muldenwinkel α in einem Bereich zwischen 0,95 und 1,36 liegt. Insbesondere bei einem Verhältnis β/α von 1,15 bis 1,3 wird eine ausreichende und intensive Vermischung erzielt. Die Art und Weise, mit der die Verteilung des Kraftstoffes stattfindet ist bedeutend, um eine ausreichende Vermischung zu erzielen. Durch die oben beschriebenen Verhältnisse von β/α wird der Auftreffpunkt des Einspritzstrahls 8 auf der Muldenoberfläche 11 bestimmt und somit die Vermischungsverhältnisse innerhalb der Mulde 4 beeinflusst.

Zur weiteren Optimierung der Ausgestaltung der Kolbenmulde 4 im Hinblick auf eine rußfreie Verbrennung weist eine Kolbenmuldenkontur 11 zwischen dem Muldenboden 13 und dem Muldenrand 12 einen Muldenbodenradius RK auf, der derart ausgebildet ist, dass ein Verhältnis RK/DM von Muldenbodenradius RK zu maximalem Muldendurchmesser DM in einem Bereich zwischen 0,1 und 0,35 liegt. Vorzugsweise liegt das Verhältnis RK/DM zwischen 0,16 und 0,22, um somit den positiven Effekt auf die Vermischung des Kraftstoffes mit der Luft zu verstärken. Um eine weitere Hemmung der Russpartikelbildung während der Verbrennung zu erzielen, weist die Kolbenmuldenkontur 11 zwischen dem Kompressionsvorsprung 10 und dem Muldenboden 13 einen Vorsprungsradius RH auf, wobei ein Verhältnis RH/DM von Vorsprungsradius RH zu maximalem Muldendurchmesser DM in einem Bereich zwischen 0,45 und 1,1 liegt.

Um weiterhin die Bildung von kraftstoffreichen Zonen im Brennraum 5 zu unterbinden, ist der Kompressionsabstand H, mit dem der höchst liegende Kompressionsvorsprungsbereich 10a vom Kolbenboden 7 beabstandet ist, derart gewählt, dass ein Verhältnis H/TM von Kompressionsabstand H zu maximaler Muldentiefe TM in einem Bereich zwischen 0,1 und 0,45, insbesondere zwischen 0,15 und 0,25 liegt.

Gemäß einer weiteren bevorzugten Ausführungsform der Erfindung wird zur weiteren Reduzierung der Russpartikelbildung im Bereich des Muldenbodens 13 ein Verhältnis Dmin/DK von einem Durchmesser bei maximaler Muldentiefe Dmin zu Kolbendurchmesser DK von 0,22 bis 0,45 oder von 0,22 bis 0,39 gewählt. Es hat sich gezeigt, dass sich bei einem Verhältnis Dmin/DK in einem Bereich zwischen 0,3 und 0,39 eine sehr niedrige Rußpartikelbildung ergibt.

Die erfindungsgemäße Brennkraftmaschine arbeitet vorzugsweise nach dem Vier-Takt-Prinzip. Dennoch eignet sich die erfindungsgemäße Brennraumkonfiguration ebenfalls für Brennkraftmaschinen, die nach dem Zwei-Takt-Prinzip betrieben werden. Bei einem 4-Takt-Verfahren entspricht ein Takt einem vollen Kolbenhub. Das aus vier Takten bestehende Arbeitsspiel der Brennkraftmaschine entspricht einem Verbrennungszyklus, wobei ein Verbrennungszyklus mit einem ersten Ansaugtakt beginnt, bei dem sich der Kolben 2 in einer Abwärtsbewegung bis zu einem unteren Totpunkt bewegt. Die aktuelle Lage des Kolbens 2 zum Zylinderkopf 1 wird durch den Kurbelwinkel KW in Bezug auf den oberen Totpunkt OT bestimmt.

Im Ansaugtakt wird dem Brennraum 5 Verbrennungsluft zugeführt, wobei sich der Kolben 2 in einem anschließenden Kompressionstakt in einer Aufwärtsbewegung in Richtung des Zylinderkopfes 1 bewegt und dabei die angesaugte Luft verdichtet. Der Ladungswechsel im Brennraum 5 erfolgt über nicht dargestellte, im Zylinderkopf 1 angeordnete Gaswechselventile und Gaskanäle. Mit dem Erreichen des oberen Totpunktes OT im Zylinderkopf ist das Ende der Verdichtung erreicht.

Die Kraftstoffeinspritzung findet vorzugsweise in einem von 20°KW vor OT bis 35°KW nach OT statt. Durch die erfindungsgemäße Brennraumkonfiguration in Verbindung mit den oben aufgeführten Verhältnissen, die miteinander im Sinne der Erfindung beliebig kombinierbar sind, ergeben sich eine abgestimmte Muldentiefe auf das Muldenvolumen und eine auf die den Muldenkonturverlauf angepasste freie Kraftstoffstrahllänge. Dadurch kommt eine optimale Kontaktoberfläche der Kraftstoffstrahlen 8 mit der Verbrennungsluft zustande, so dass eine positive Interaktion der an der Kolbenmuldeoberfläche 11 abgelenkten Kraftstoffmenge mit der Verbrennungsluft erzielt wird. Dies führt dann zu einer zusätzlichen Lufterfassung und zu einer ausreichenden und gleichmäßigen Aufteilung des Kraftstoffs im Brennraum trotz eines drallarmen Brennverfahrens. Während der Kraftstoffeinspritzung vermischen sich die Kraftstoffteilchen mit der Verbrennungsluft und mittels einer Selbstzündung wird die Verbrennung eingeleitet. Dabei bewegt sich der Kolben in einem dritten Expansionstakt wieder nach unten. Anschließend werden die Abgase in einem letzten Ausschiebetakt aus dem Brennraum 5 verdrängt.

## Patentansprüche

1. Brennkraftmaschine mit
- mindestens einem Zylinder, in dem ein Brennraum (4) zwischen einem Kolben (2) und einem Zylinderkopf (1) begrenzt ist,
- einem im Zylinderkopf (1) angeordneten Kraftstoffinjektor (6), der eine Einspritzdüse (3) mit mehreren Einspritzbohrungen aufweist,
- einer im Kolben (2) angeordneten Kolbenmulde (4), die einen Muldenboden (13) mit einer maximalen Muldentiefe (TM) aufweist und in der Einspritzdüse dentiefe (TM) aufweist und in der der Einspritzdüse
(3) gegenüberliegend ein Kompressionsvorsprung (10) mit einem Muldenwinkel (α) positioniert ist, wobei
- die Einspritzbohrungen derart gestaltet sind, dass Kraftstoffstrahlen (8) aus den Einspritzbohrungen mit einem Kraftstoffkegelwinkel (β) austreten,
**dadurch gekennzeichnet, dass**
- die Kolbenmulde (4) unterhalb einer an einem obersten Teil des Muldenrands anliegenden horizontalen Ebene ein Muldenvolumen (MV) aufweist und derart ausgebildet ist, dass
- ein Verhältnis(TM/MV) von maximaler Muldentiefe (TM) zu Muldenvolumen (MV) in einem Bereich zwischen 0,05 und 0,35 [1/cm²], insbesondere zwischen 0,1 und 0,25 [1/cm²] liegt.

2. Brennkraftmaschine nach Anspruch 1,
**dadurch gekennzeichnet, dass**
die Kolbenmulde (4) von einem ringförmigen Muldenrand (12) mit einem maximalen Muldendurchmesser (DM) umfasst ist, und der Kolben (2) einen Kolbendurchmesser (DK) aufweist, wobei ein Verhältnis (DK/DM) von Kolbendurchmesser (DK) zu maximalem Muldendurchmesser (DM) in einem Bereich zwischen 1,05 und 1,4, insbesondere zwischen 1,1 und 1,2 liegt.

3. Brennkraftmaschine nach Anspruch 1 oder 2,
**dadurch gekennzeichnet, dass**
die aus den Einspritzbohrungen austretenden Kraftstoffstrahlen während einer Kraftstoffeinspritzung in einem Bereich von 20°KW vor einem oberen Totpunkt bis 35°KW nach dem oberen Totpunkt auf die Kolbenmulde (4) auftreffen, wobei die Einspritzbohrungen und der Kompressionsvorsprung (10) derart ausgebildet sind, dass ein gebildetes Verhältnis (β/α) von Kraftstoffkegelwinkel (β) zu Muldenwinkel (α) in einem Bereich zwischen 0,95 und 1,36, insbesondere zwischen 1,15 und 1,3 liegt.

4. Brennkraftmaschine nach einem der vorhergehenden Ansprüche,
**dadurch gekennzeichnet, dass**
die Kolbenmulde (4) einen Muldenboden (13) mit einer maximalen Muldentiefe (TM) aufweist, wobei ein Verhältnis (Dmin/DK) von Durchmesser (Dmin) bei maximaler Muldentiefe zu Kolbendurchmesser (DK) in einem Bereich zwischen 0,22 und 0,45, insbesondere zwischen 0,3 und 0,39 liegt.

5. Brennkraftmaschine nach einem der vorhergehenden Ansprüche,
**dadurch gekennzeichnet, dass**
eine Kolbenmuldenkontur (11) zwischen dem Muldenboden (13) und dem Muldenrand (12) einen Muldenbodenradius (RK) aufweist, wobei ein Verhältnis (RK/DM) von Muldenbodenradius (RK) zu maximalem Muldendurchmesser (DM) in einem Bereich zwischen 0,1 und 0,35, insbesondere zwischen 0,16 und 0,22 liegt.

6. Brennkraftmaschine nach einem der vorhergehenden Ansprüche,
**dadurch gekennzeichnet, dass**
die Kolbenmuldenkontur (11) zwischen dem Kompressionsvorsprung (10) und dem Muldenboden (13) einen Vorsprungsradius (RH) aufweist, wobei ein Verhältnis (RH/DM) von Vorsprungsradius (RH) zu maximalem Muldendurchmesser (DM) in einem Bereich zwischen 0,45 und 1,1 liegt.

7. Brennkraftmaschine nach einem der vorhergehenden Ansprüche,
**dadurch gekennzeichnet, dass**
der Kompressionsvorsprung (10) derart ausgebildet ist, dass der höchst liegende Kompressionsvorsprungsbereich (10a) vom Kolbenboden (7) durch einen Kompressionsabstand (H) beabstandet ist, wobei ein Verhältnis (H/TM) von Kompressionsabstand (H) zu maximaler Muldentiefe (TM) in einem Bereich zwischen 0,1 und 0,45, insbesondere zwischen 0,15 und 0,25 liegt.

## Claims

1. Internal combustion engine comprising
at least one cylinder wherein a combustion chamber (4) is bounded between a piston (2) and a cylinder head (1).
- a fuel injector (6) located in the cylinder head (1) and comprising an injector nozzle (3) with a plurality of injection bores,
- a piston recess (4) located in the piston (2), which has a recess base (13) with a maximum recess depth (TM) and in which a compression projection (10) with a recess angle (α) is positioned opposite the injector nozzle (3), wherein
- the injection bores are designed such that the fuel jets (8) emerge from the injection bores with a fuel cone angle (β),
**characterised in that**
- the piston recess (4) has a recess volume (MV) below a horizontal plane bounding a topmost part of the recess edge and is designed such that
- a ratio (TM/MV) between the maximum recess depth (TM) and the recess volume (MV) lies in a range between 0.05 and 0.35 (l/cm²), in particular between 0.1 and 0.25 (l/cm²).

2. Internal combustion engine according to claim 1,
**characterised in that**
the piston recess (4) is surrounded by an annular recess edge (12) with a maximum recess diameter (DM) and **in that** the piston (2) has a piston diameter (DK), wherein a ratio (DK/DM) between the piston diameter (DK) and the maximum recess diameter (DM) lies in a range between 1.05 and 1.4, in particular between 1.1 and 1.2.

3. Internal combustion engine according to claim 1 or 2,
**characterised in that**
during a fuel injection the fuel jets emerging from the injection bores impinge on the piston recess (4) in a range between 20°CA before a top dead centre and 35°CA after a top dead centre, the injection bores and the compression projection (10) being designed such that a ratio (β/α) between the fuel cone angle (β) and the recess angle (α) lies in a range between 0.95 and 1.36, in particular between 1.15 and 1.3.

4. Internal combustion engine according to any of the preceding claims, **characterised in that**
the piston recess (4) has a recess base (13) with a maximum recess depth (TM), wherein a ratio (Dmin/DK) between a diameter (Dmin) at maximum recess depth and the piston diameter (DK) lies in a range between 0.22 and 0.45, in particular between 0.3 and 0.39.

5. Internal combustion engine according to any of the preceding claims, **characterised in that**
a piston recess contour (11) between the recess base (13) and the recess edge (12) has a recess base radius (RK), wherein a ratio (RK/DM) between the recess base radius (RK) and the maximum recess diameter (DM) lies in a range between 0.1 and 0.35, in particular between 0.16 and 0.22.

6. internal combustion engine according to any of the preceding claims, **characterised in that**
the piston recess contour (11) has a projection radius (RH) between the compression projection (10) and the recess base (13), wherein a ratio (RH/DM) between the projection radius (RH) and the maximum recess diameter (DM) lies in a range between 0.45 and 1.1.

7. Internal combustion engine according to any of the preceding claims, **characterised in that**
the compression projection (10) is designed such that the highest region of the compression projection (10a) has a compression distance (H) from the piston crown (7), wherein a ratio (H/TM) between the compression distance (H) and the maximum recess depth (TM) lies in a range between 0.1 and 0.45, in particular between 0.15 und 0.25.

## Revendications

1. Moteur à combustion interne équipé
- d'au moins un cylindre délimitant une chambre de combustion (4) entre un piston (2) et une culasse (1),
- d'un injecteur de carburant (6) monté dans la culasse (1), qui présente une buse d'injection (3) avec plusieurs orifices d'injection,
- d'une cavité (4) de piston formée dans le piston (2), le fond (13) de cette cavité ayant une profondeur (TM) maximale, et dans laquelle la buse d'injection (3) est positionnée en face d'une saillie de compression (10) avec un angle de cavité (α),
- les orifices d'injection étant formées de telle sorte que les jets de carburant (8) sortent des orifices d'injection avec un angle conique de carburant (β) **caractérisé en ce que**
- la cavité du piston (4) présente en dessous d'un niveau horizontal adjacent à une partie supérieure du bord de la cavité un volume de cavité (MV) et est formée de telle sorte qu'
- un rapport (TM / MV) entre la profondeur de la cavité (TM) maximale et le volume de cavité (MV) se situe dans une plage entre 0,05 et 0,35 [l/cm²], en particulier entre 0,1 et 0,25 [l/cm²]

2. Moteur à combustion interne selon la revendication 1, **caractérisé en ce que** la cavité de piston (4) est entourée par un bord de cavité (12) en forme annulaire ayant un diamètre de cavité (DM) maximal, et **en ce que** le piston (2) présente un diamètre (DK) de piston, un rapport (DK / DM) entre le diamètre de piston (DK) et le diamètre de cavité (DM) maximal se situant dans une plage entre 1,06 et 1,4, en particulier entre 1,1 et 1,2.

3. Moteur à combustion interne selon la revendication 1 ou 2, **caractérisé en ce que** les jets de carburants sortant des orifices d'injection pendant une injection de carburant se produisent dans une zone de 20°KW avant un point mort haut jusqu'à 35°KW après le point mort haut sur la cavité du piston (4), les orifices d'injection et la saillie de compression (10) étant formés de telle sorte qu'un rapport (β/α) formé entre l'angle conique de carburant (β) et l'angle de cavité (α) se situe dans une plage entre 0,95 et 1.36, en particulier entre 1,15 et 1,3.

4. Moteur à combustion interne selon l'une quelconque des revendications précédentes, **caractérisé en ce que** la cavité de piston (4) présente un fond de cavité (13) ayant une profondeur (TM) maximale, un rapport (Dmin/DK) entre la diamètre (Dmin) et le diamètre du piston (DK) à une profondeur de cavité maximale se situe dans une plage entre 0,22 et 0,45, en particulier entre 0,3 et 0,39.

5. Moteur à combustion interne selon l'une quelconque des revendications précédentes, **caractérisé en ce que** le contour (11) de la cavité de piston présente un rayon du fond de cavité (RK) entre le fond de cavité (13) et le bord de cavité (12), un rapport (RK/DM) entre le rayon de fond de cavité (RK) et le diamètre dé cavité (DM) maximal se situant dans une plage entre 0,1 et 0,35, en particulier entre 0,16 et 0,22.

6. Moteur à combustion interne selon l'une quelconque des revendications précédentes, **caractérisé en ce que** le contour (11) de la cavité de piston présente un rayon de saillie (RH) entre la saillie de compression (10) et la fond de cavité (13), un rapport (RH/DM) entre le rayon de saillie (RH) et le diamètre de cavité (DM) maximal se situant dans une plage entre 0,45 et 1,1.

7. Moteur à combustion interne selon l'une quelconque des revendications précédentes, **caractérisé en ce que** la saillie de compression (10) est formée de telle sorte que la zone de saillie de compression (10a) la plus élevée est eloignée du fond de piston (7) par une distance de compression (H), un rapport (H/TM) entre la distance de compression (H) et la profondeur maximale de cavité (TM) se situant dans une plage entre 0,1 et 0,45, en particulier entre 0,15 et 0,25.
